# EUROPEAN PATENT SPECIFICATION

(11) **EP 2 027 325 B1**
(45) Date of publication and mention of the grant of the patent: **01.06.2011**
(21) Application number: 07765369.9
(22) Date of filing: 12.06.2007
(51) Int. Cl.: D06F 39/00, D06F 39/02, D06F 58/20

(54) **A WASHING MACHINE**
WASCHMASCHINE
MACHINE À LAVER

(30) Priority: 12.06.2006 TR 200602966
(43) Date of publication of application: 25.02.2009
(73) Proprietor: Arçelik Anonim Sirketi, 34950 Istanbul (TR)
(72) Inventor: SEKER, Deniz, 34950 Istanbul (TR)
(86) International application number: PCT/EP2007/055752
(87) International publication number: WO 2007/144340

(56) References cited:
- US-A- 4 474 018
- US-A- 4 603 489
- US-A- 4 621 438
- US-A1- 2003 056 393
- US-A1- 2005 044 744

## Description

The present invention relates to a washing machine wherein energy savings is provided.

In washing machine, the wash water has to be heated in different phases in accordance with the program operated. Mostly electric heaters that require high power are utilized for heating the water. The energy needed for heating constitutes approximately 75 % of the energy consumed for the entire washing process. Therefore, in recent years the research realized for decreasing the energy consumption of washing machine is directed towards reducing the energy consumed particularly by the heater.

Besides, usually main supply water of ambient temperature is delivered into the washing machine. In regions wherein great temperature differences are seen between seasons, since the temperature of the water delivered into the machine is 15°C or lower, a considerable length of time is needed to heat the water particularly in the winter months. This is a factor that results in the increase of energy consumption in cold weather.

Furthermore, the temperature of the water delivered into the washing machine is a factor that is effective in the dissolving rate of the washing agent. It is known that the washing agent (detergent) is dissolved better as the water temperature rises.

In the state of the art documents no. EP914800, GB2402204, DE2730489, GB759022 and US4531572, the explanation is given for the implementations about using the heat of the discharged hot waste water to heat the cold, clean water delivered in.

In the United Sates of America patent application no US4245488, the explanation is given for the cold water taken into the machine that is heated by the heat spreading from the motor circuits.

In the United States of America patent no. US4509345 and the European patent application no. EP463576, a washer-dryer is described. The cold water taken into the washer is delivered into the washer after it is heated by being in heat exchange relationship with the hot drying air.

In the Great Britain patent application no. GB720779, in a water heater with a heat pump, the waste heat of the compressor is used in heating the water.

US 2003056393 discloses a washing/drying machine comprising a compressor, a condenser, an evaporator and a capillary tube.

The objective of the present invention is to design a washing machine wherein the wash water is heated more efficiently.

The washing machine designed to fulfill the objective of the present invention is explicated in the attached claims.

In the washing machine of the present invention, the water delivered by the main supply is heated by a heat pump. Furthermore, the heat emitted by a capillary tube which is in a heat exchange relationship with the water inlet duct is used in heating the water. Accordingly, the time it takes to heat the water is shortened, thus saving energy.

In another embodiment of the present invention, the capillary tube is disposed on the water inlet duct just prior to the detergent dispenser. Consequently, the water that-reaches the detergent dispenser is also heated helping to dissolve the washing agent.

The washing machine designed to fulfill the objective of the present invention is illustrated in the attached figures, where:

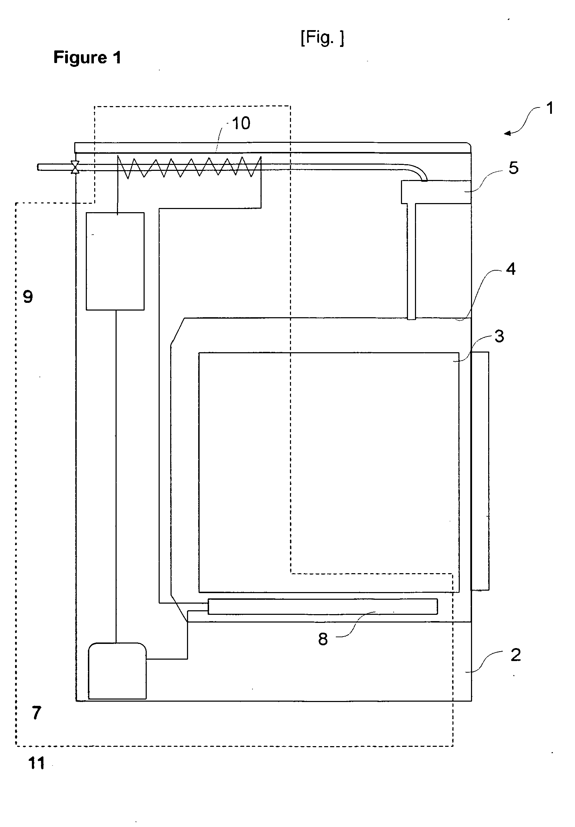

Figure 1 is the schematic view of a washing machine.

The elements illustrated in the figures are numbered as follows:
1. Washing machine
2. Body
3. Drum
4. Tub
5. Detergent dispenser
6. Water inlet duct
7. Compressor
8. Condenser
9. Evaporator
10. capillary tube
11. Heat pump

The washing machine (1) comprises a body (2), a tub (4) situated within the body (2), a drum (3) disposed in the tub (4) wherein items to be washed are emplaced, a water inlet duct (6) for receiving cold water from the main supply and a detergent dispenser (5) wherein the washing agent to be used for washing is put. The washing machine (1) furthermore comprises a heat pump (11) that is utilized for heating the water.

The heat pump (11) comprises a compressor (7) providing the circulating fluid to be aspirated and pumped, a condenser (8) for condensing this fluid and heating the wash water with the heat thus generated, a capillary tube (10) providing to decrease the pressure of the fluid leaving the condenser (8) and an evaporator (9) providing the fluid to absorb the ambient heat and to be vaporized again. The condenser (8) is either immersed in a storage tank (not shown in the figures) wherein wash water is collected or is disposed directly in the tub (4).

In the washing machine (1) of the present invention, the capillary tube (10) is disposed such that it will be in a heat exchange relationship with the water inlet duct (6). By the way, the cold water received from the main supply can also be heated by the heat emanated from the circulating fluid that is depressurized as it passes through the capillary tube (10).

In the embodiment of the present invention, the wash water is received from the main supply by means of the water inlet duct (6). Meanwhile, the heat pump (11) is also operated. First of all, the water that is in a heat exchange relationship with the capillary tube (10) is heated a little. Afterwards, the water reaching the windings of the condenser (8) is heated up to the temperature required by the washing program selected by the user. The previous heating of the water by the capillary tube (10) enables to reach the required temperature faster and also saves energy.

In another embodiment of the present invention, the capillary tube (10) is disposed on the water inlet duct (6) prior to the detergent dispenser (5). Accordingly, the wash water can be heated before reaching the detergent dispenser (5) and thus the washing agent can be dissolved better. This will also allow for the opportunity to use less washing agent.

In an embodiment of the present invention, the capillary tube (10) is attached to the water inlet duct (6) by means of wrapping around the coils thereof. In yet another embodiment, the heat exchange relationship between the capillary tube (10) and the water inlet duct (6) is achieved by means of more than one fin (not shown in the figures) that extend along there between.

The washing machine (1) of the present invention can be a combined machine that is used for both washing and drying. In this case, the heat pump (11) is used not only for heating the water but also for heating or dehumidifying the drying air.

The washing machine (1) of the present invention consumes less energy since the heat emanated from the capillary tube (10) is also taken advantage of besides the condenser (8). Furthermore, since water is heated before reaching the detergent dispenser (5), the washing agent can be used more efficiently.

## Claims

1. A washing machine (1) comprising a body (2), a tub (4) situated within the body (2), a drum (3) disposed in the tub (4) wherein items to be washed are emplaced, a water inlet duct (6) for receiving cold water from the main supply, a detergent dispenser (5) wherein the washing agent is disposed and a heat pump (11) having a compressor (7) providing the circulating fluid to be aspirated and pumped, a condenser (8) for condensing this fluid and thus providing to heat the wash water, an evaporator (9) providing the fluid to absorb the ambient heat to be vaporized again and a capillary tube (10), and **characterized by** a capillary tube (10) which is disposed such that it will be in a heat exchange relationship with the water inlet duct (6).

2. A washing machine (1) as in Claim 1, **characterized by** a capillary tube (10) which is disposed on the water inlet duct (6) prior to the detergent dispenser (5).

3. A washing machine (1) as in Claim 1 or 2, **characterized by** a capillary tube (10) the coils of which are wrapped around the water inlet duct (6).

4. A washing machine (1) as in Claim 1, 2 or 3, **characterized by** more than one fin that extend along between the capillary tube (10) and the water inlet duct (6).

5. A washing machine (1) as in any one of the above claims, **characterized by** a condenser (8) that is immersed in a storage tank (not shown in the figures) wherein the wash water is collected.

6. A washing machine (1) as in any one of the Claims 1 to 4, **characterized by** a condenser (8) that is disposed directly in the tub (4).

## Patentansprüche

1. Waschmaschine (1), umfassend:
einen Gehäusekörper (2)
einen Laugenbehälter (4), der in dem Gehäusekörper (2) angeordnet ist,
eine Trommel (3), die in dem Laugenbehälter (4) angeordnet ist und in die zu waschende Objekte gegeben werden,
eine Wassereinlassleitung (6), die Kaltwasser von der Hauptwasserversorgung erhält,
eine Waschmittelabgabeeinheit (5), in die das Waschmittel gegeben wird, und
eine Wärmepumpe (11) mit einem Kompressor (7), der bewirkt, dass das zirkulierende Fluid angesaugt und gepumpt wird, einen Kondensator (8) zum Kondensieren dieses Fluids, um auf diese Weise das Waschwasser zu erwärmen, einen Verdampfer (9), der bewirkt, dass das Fluid die Umgebungswärme aufnimmt, um wieder verdampft zu werden, und eine Kapillarröhre (10),
und **gekennzeichnet durch** eine Kapillarröhre (10), die derart angeordnet ist, dass sie sich in einer Wärmeaustauschbeziehung zu der Wassereinlassleitung (6) befindet.

2. Waschmaschine (1) nach Anspruch 1, **gekennzeichnet durch** eine Kapillarröhre (10), der vor der Waschmittelabgabeeinheit (5) an der Wassereinlassleitung (6) angeordnet ist.

3. Waschmaschine (1) nach Anspruch 1 oder 2, **gekennzeichnet durch** eine Kapillarröhre (10), deren Windungen um die Wassereinlassleitung (6) gewickelt sind.

4. Waschmaschine (1) nach Anspruch 1, 2 oder 3, **gekennzeichnet durch** mehr als eine Lamelle, die sich zwischen der Kapillarröhre (10) und der Wassereinlassleitung (6) erstreckt.

5. Waschmaschine (1) nach einem der vorangehenden Ansprüche, **gekennzeichnet durch** einen Kondensator (8), der in einen Speichertank (nicht dargestellt) getaucht ist, in dem das Waschwasser gesammelt wird.

6. Waschmaschine (1) nach einem der Ansprüche 1 bis 4, **gekennzeichnet durch** einen Kondensator (8), der unmittelbar im Laugenbehälter (4) angeordnet ist.

## Revendications

1. Une machine à laver (1) comprenant
un corps (2),
une cuve (4) située dans le corps (2),
un tambour (3) disposé dans la cuve (4) dans laquelle les objets à laver sont placés,
une conduite d'entrée d'eau (6) pour recevoir l'eau froide de l'alimentation en eau,
un distributeur de détergent (5) dans lequel l'agent de lavage est disposé et
une pompe à chaleur (11) ayant un compresseur (7) permettant le fluide circulant d'être aspiré et pompé, un condenseur (8) pour condenser ledit fluide et donc permettant le chauffage de l'eau de lavage, un évaporateur (9) permettant au fluide d'absorber la chaleur ambiante à vaporiser à nouveau et un tube capillaire (10) ;
et **caractérisée par** un tube capillaire (10) qui est disposé de telle sorte qu'il sera dans une relation d'échange thermique avec la conduite d'entrée d'eau (6).

2. Une machine à laver (1) selon la Revendication 1, **caractérisée par** un tube capillaire (10) qui est disposé sur la conduite d'entrée d'eau (6) avant le distributeur de détergent (5).

3. Une machine à laver (1) selon la Revendication 1 ou 2, **caractérisée par** un tube capillaire (10) dont les serpentins sont enroulés autour de la conduite d'entrée d'eau (6).

4. Une machine à laver (1) selon la Revendication 1, 2 ou 3, **caractérisée par** plus d'une ailette qui s'étend entre le tube capillaire (10) et la conduite d'entrée d'eau (6).

5. Une machine à laver (1) selon l'une quelconque des revendications précédentes, **caractérisée par** un condenseur (8) qui est immergé dans un réservoir de stockage (non représenté sur les figures) dans lequel l'eau de lavage est collectée.

6. Une machine à laver (1) selon l'une quelconque des revendications de 1 à 4, **caractérisée par** un condenseur (8) qui est disposé directement dans la cuve (4).
